# EUROPEAN PATENT SPECIFICATION

(11) **EP 4 112 223 B1**
(45) Date of publication and mention of the grant of the patent: **07.02.2024**
(21) Application number: 22181296.9
(22) Date of filing: 27.06.2022
(51) Int. Cl.: B23Q 7/00, B23Q 7/04, B23Q 7/10, B27M 1/08, B65G 1/04

(54) **WORK CENTRE TO PROCESS SECTION BARS, IN PARTICULAR MADE OF ALUMINIUM, LIGHT ALLOYS, PVC OR THE LIKE**
ARBEITSSTATION ZUR VERARBEITUNG VON PROFILSTÄBEN, INSBESONDERE AUS ALUMINIUM, LEICHTLEGIERUNGEN, PVC ODER DERGLEICHEN
POSTE DE TRAVAIL POUR TRAITER DES BARRES DE SECTION, EN PARTICULIER EN ALUMINIUM, EN ALLIAGES LÉGERS, EN PVC OU ANALOGUES

(30) Priority: 30.06.2021 IT 202100017210
(43) Date of publication of application: 04.01.2023
(73) Proprietor: F.O.M. Industrie S.r.l., 47841 Cattolica (IT)
(72) Inventor: LATTANZI, Lorenzo, 61121 Pesaro (PU) (IT)
(74) Representative: Studio Torta S.p.A.

(56) References cited:
- EP-A1- 1 698 571
- EP-A1- 3 769 907
- WO-A1-88/10225
- DE-A1- 1 958 958

## Description

### TECHNICAL FIELD OF THE INVENTION

The present invention relates to a work centre to process section bars, in particular made of aluminium, light alloys, PVC or the like.

### STATE OF THE ART

In the section bar processing industry, which deals with the processing of section bars made of aluminium, light alloys, PVC or the like, machines are known, which comprise an elongated base extending in a first, substantially horizontal direction; a processing station, which is obtained along the base and is provided with an operating head to process the section bars; and a feeding device to feed the section bars along the base and through the processing station in the first direction.

The work centre further comprises a loading station to load the section bars to be processed onto the feeding device and an unloading station to unload the section bars that were just processed from the feeding device.

Each loading and unloading station generally comprises a belt conveyor, which extends in a second, substantially horizontal direction transverse to the first direction, faces the feeding device in the second direction and cooperates with a store for storing the section bars.

The store of the unloading station normally comprises a plurality of racks distributed along two rows of racks parallel to one another, which extend in the second direction and are arranged on opposite sides of an unloading unit in the first direction.

Each rack is substantially shaped like a parallelepiped and is provided with a plurality of horizontal pockets, which open up outwards in the area of a side face of the rack.

The unloading unit comprises a guide rail, which is fixed to the ground, extends between the two rows of racks parallel to the second direction and is engaged, in a sliding manner, by a transfer assembly configured to retrieve the section bars that were just processed from the belt conveyor of the unloading station and transfer them to the racks. EP 3 769 907 A1 discloses a work centre according to the preamble of claim 1.

Known work centres to process section bars, in particular made of aluminium, light alloys, PVC or the like, of the type described above suffer from some drawbacks, which are mainly due to the fact that the assembly defined by the store and by the unloading unit is relatively large-sized and that the unloading unit has a relatively small productivity, which is smaller than the productivity of the processing station.

Furthermore, known work centres to process section bars, in particular made of aluminium, light alloys, PVC or the like, of the type described above suffer from a further drawback lying in the fact that the storage of the processed section bars in the horizontal pockets of the racks of the store of the unloading station causes the section bars to scrape along the pockets and, hence, causes the section bars to be damaged.

The object of the present invention is to provide a work centre to process section bars, in particular made of aluminium, light alloys, PVC or the like, which is designed to eliminate the aforementioned drawbacks in a straightforward, relatively low-cost manner.

### SUBJECT AND SUMMARY OF THE INVENTION

According to the present invention, there is provided a work centre to process section bars, in particular made of aluminium, light alloys, PVC or the like, according to the appended claims.

### BRIEF DESCRIPTION OF THE DRAWINGS

The present invention will now be described with reference to the accompanying drawings showing a nonlimiting embodiment thereof, wherein:
figure 1 is a schematic perspective view, with parts removed for greater clarity, of a preferred embodiment of the work centre according to the invention;
figure 2 is a schematic perspective view, with parts removed for greater clarity, of a first detail of the work centre of figure 1;
figure 3 is a schematic perspective view, with parts removed for greater clarity, of a second detail of the work centre of figure 1;
figure 4 is a schematic perspective view, with parts removed for greater clarity, of a detail of figure 3;
figure 5 is a schematic perspective view, with parts removed for greater clarity, of a third detail of the work centre of figure 1; and
figure 6 is a schematic perspective view, with parts removed for greater clarity, of a variant of the work centre of figures 1 and 2.

### DETAILED DESCRIPTION OF PREFERRED EMBODIMENTS OF THE INVENTION

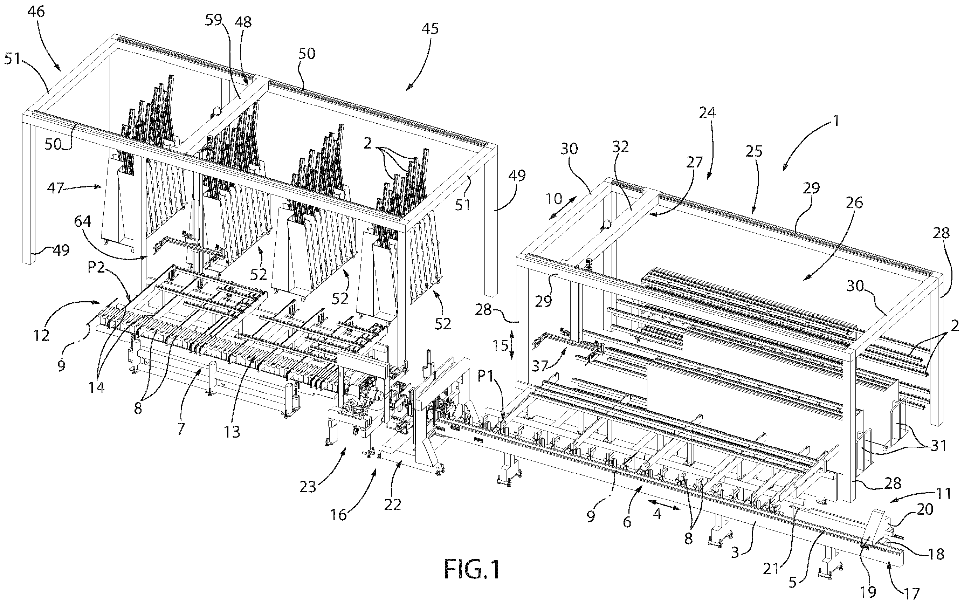

With reference to figure 1, number 1 indicates, as a whole, a work centre to process section bars 2 made of aluminium, light alloys, PVC or the like having an elongated shape.

The work centre 1 comprises an elongated base 3, which extends in a horizontal direction 4 and is provided with a longitudinal guide member 5 parallel to the direction 4 and with two roller support devices 6, 7 mounted one after the other along the base 3.

Each device 6, 7 has a plurality of lower rollers 8, which are mounted so as to rotate around respective rotation axes 9 substantially parallel to one another and to a horizontal direction 10 transverse to the direction 4 and define a lower support surface P1 for at least one section bar 2.

The work centre 1 further comprises a loading station 11 to load the section bars 2 to be processed onto the device 6 and an unloading station 12 to unload the section bars 2 that were just processed from the device 7.

Each station 11, 12 comprises a belt conveyor 13, which faces the relative device 6, 7 in the direction 10 and comprises, in turn, a plurality of conveyor belts 14, which are parallel to one another and to the direction 10 and define a lower support surface P2 for at least one section bar 2.

The rollers 8 are movable in a vertical direction 15, which is orthogonal to the directions 4 and 10, between a lifted operating position, in which the surface P1 extends above the surface P2, and a lowered rest position, in which the surface P1 extends under the surface P2.

The work centre 1 further has a processing station 16, which is obtained along the base 3 between the stations 11, 12 and extends between the devices 6, 7.

The section bars 2 are moved along the surface P1 and through the station 16 in the direction 4 by a feeding device 17 comprising a first horizontal slide 18, which is coupled to the longitudinal member 5 in a sliding manner so as to make, relative to the base 3, straight movements along the longitudinal member 5 in the direction 4; a second horizontal slide 19, which is coupled to the horizontal slide 18 in a sliding manner so as to make, relative to the horizontal slide 18, straight movements in the direction 10; and a vertical slide 20, which is coupled to the horizontal slide 19 in a sliding manner so as to make, relative to the horizontal slide 19, straight movements in the direction 15.

The vertical slide 20 has an elongated shape, extends in the direction 4 and supports a holding member 21, which is connected to a free end of the vertical slide 20.

The member 21 is coupled to the vertical slide 20 in a rotary manner so as to rotate, relative to the vertical slide 20, around a rotation axis (not shown) parallel to the direction 4 and comprises two jaws (not shown) movable between a clamping position and a release position to clamp and release the section bars 2.

With regard to what discussed above, it should be pointed out that the section bars 2 to be processed are fed to the roller support device 6 by the conveyor 13 of the station 11 and that the section bars 2 that were just processed are retrieved from the roller support device 7 by means of the conveyor 13 of the station 12.

The station 16 is provided, in this specific case, with a drilling and/or milling unit 22 to carry out a chipping machining of the section bars 2 and with a cutting unit 23 to cut the section bars 2.

The loading station 11 further comprises a loading unit 24 to transfer the section bars 2 to be processed onto the relative conveyor 13.

The unit 24 comprises a gantry frame 25 aligned with the relative conveyor 13 in the direction 10; a store 26 arranged substantially within the frame 25 for storing the section bars 2 to be processed; and a transfer assembly 27 mounted on the frame 25 and movable along the frame 25 so as to transfer the section bars 2 to be processed from the store 26 to the relative conveyor 13.

The frame 25 has a length, measured parallel to the direction 4, at least equal to a length of the belt conveyor 13 of the station 11, also measured parallel to the direction 4, and comprises four uprights 28 parallel to one another, which extend in the direction 15 and are connected to one another by two cross members 29 parallel to the direction 4 and by two cross members 30 parallel to the direction 10.

The store 26 comprises, in this specific case, three racks 31, which are arranged within the frame 25 between the uprights 28, are further arranged, in this specific case, parallel to one another and to the direction 4 and each have a respective plurality of compartments (not shown) configured to receive and house relative section bars 2 to be processed.

Obviously, the number of racks 31 can be different from three and the racks 31 can be fixed to the ground or provided with wheels in order to be moved.

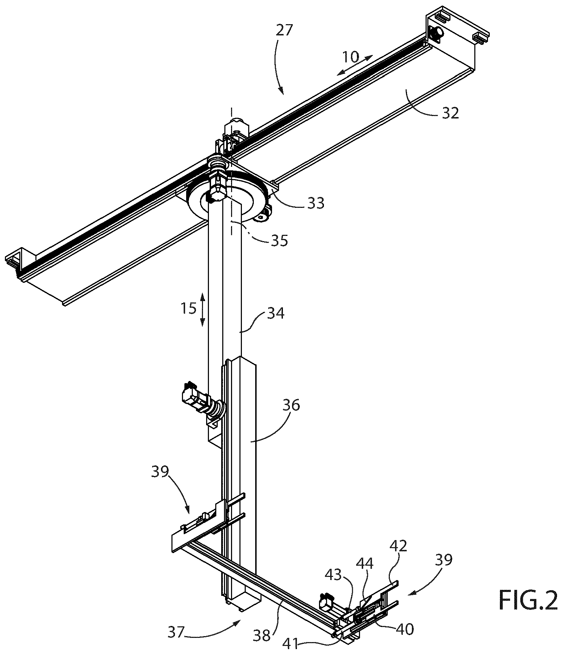

According to figures 1 and 2, the assembly 27 comprises a first horizontal slide 32, which extends between the cross members 29 in the direction 10 and is coupled to the cross members 29 in a sliding manner so as to make straight movements along the cross members 29 in the direction 4.

The assembly 27 further has a second horizontal slide 33 coupled to a lower face of the slide 32 in a sliding manner so as to make straight movements along the slide 32 in the direction 10.

The slide 33 supports a rotary upright 34, which projects downwards from the slide 33 in the direction 15 and is coupled to the slide 33 in a rotary manner so as to move, relative to the slide 33, around a rotation axis 35 parallel to the direction 15.

The assembly 27 further comprises a vertical slide 36, which extends in the direction 15 and is coupled to the upright 34 in a sliding manner so as to make straight movements along the upright 34 in the direction 15.

The slide 36 supports a holding device 37 comprising a horizontal bar 38 fixed to the slide 36 crosswise to the direction 15 and two clamping vices 39 mounted on the bar 38 so as to move relative to one another along the bar 38.

Each vice 39 comprises a lower jaw 40, which is movable crosswise to the bar 38 between a retracted position and an advanced position due to the thrust of an actuator cylinder 41, and an upper jaw 42, which is movable between a lowered clamping position and a lifted rest position to clamp and release at least one section bar 2.

The jaw 42 is moved between its lowered clamping position and its lifted release position by an actuator cylinder 43 provided with an output rod (not shown) having a free end engaged, in a sliding manner, in an inclined slot 44 obtained through the jaw 42.

In use, by combining the movements of the slide 32 in the direction 4 with the movements of the slide 33 in the direction 10, the movements of the upright 34 around the axis 35 and the movements of the slide 36 in the direction 15, the holding device 37 retrieves each section bar 2 to be processed from the relative rack 31 and releases it onto the belt conveyor 13 of the station 11.

With reference to figure 1, the unloading station 12 further has an unloading unit 45 to retrieve the section bars 2 that were just processed from the relative conveyor 13.

The unit 45 comprises a gantry frame 46 aligned with the relative conveyor 13 in the direction 10; a store 47 arranged substantially within the frame 46 for storing the section bars 2 that were just processed; and a transfer assembly 48 mounted on the frame 46 and movable along the frame 46 so as to transfer the section bars 2 that were just processed from the relative conveyor 13 to the store 47.

The frame 46 has a length, measured parallel to the direction 4, at least equal to, in particular greater than, a length of the belt conveyor 13 of the station 12, also measured parallel to the direction 4, and comprises a plurality of uprights 49 parallel to one another, which extend in the direction 15 and are connected to one another by two cross members 50 parallel to the direction 4 and by two cross members 51 parallel to the direction 10.

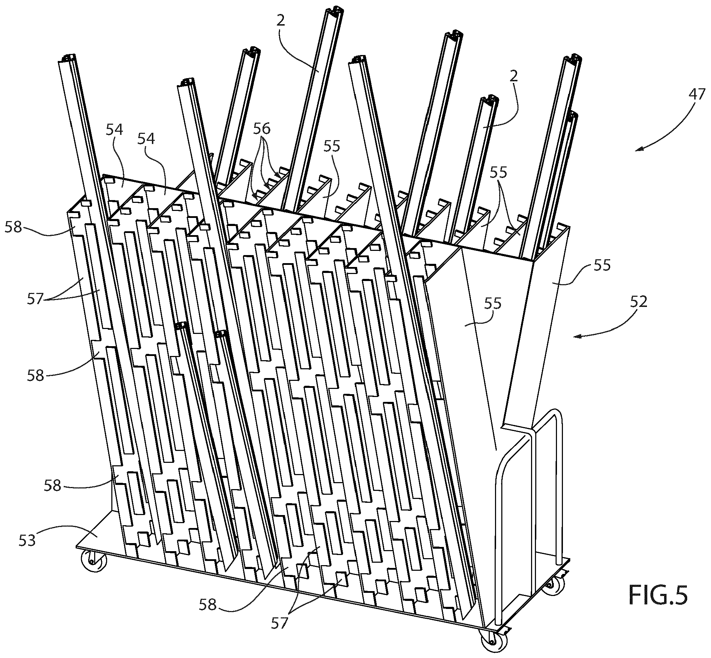

According to figures 1 and 5, the store 47 comprises a plurality of racks 52, specifically four racks 52, which are arranged within the frame 46 between the uprights 49 and are further arranged, in this specific case, parallel to one another and to the direction 10.

Each rack 52 is delimited by a substantially horizontal bottom wall 53 and comprises two rows of pockets 54 aligned with one another in the direction 10.

The pockets 54 of each row of pockets 54 are delimited by the wall 53 and are further delimited by respective pairs of side walls 55, which are parallel to one another and are inclined at an angle other than 90° relative to the wall 53.

In particular, the pockets 54 of the two rows of pockets 54 are inclined at substantially opposite angles relative to the wall 53.

In this specific case, each pocket 54 comprises a plurality of compartments 56, specifically three compartments 56, each configured to house, on the inside, at least one section bar 2 and delimited by two side walls 57, which are perpendicular to the wall 53 and each have a respective plurality of slits 58.

Obviously, the number of racks 52 can be different from four, the number of compartments 56 of each rack 52 can be different from three and the racks 52 can be fixed to the ground or provided with wheels in order to be moved.

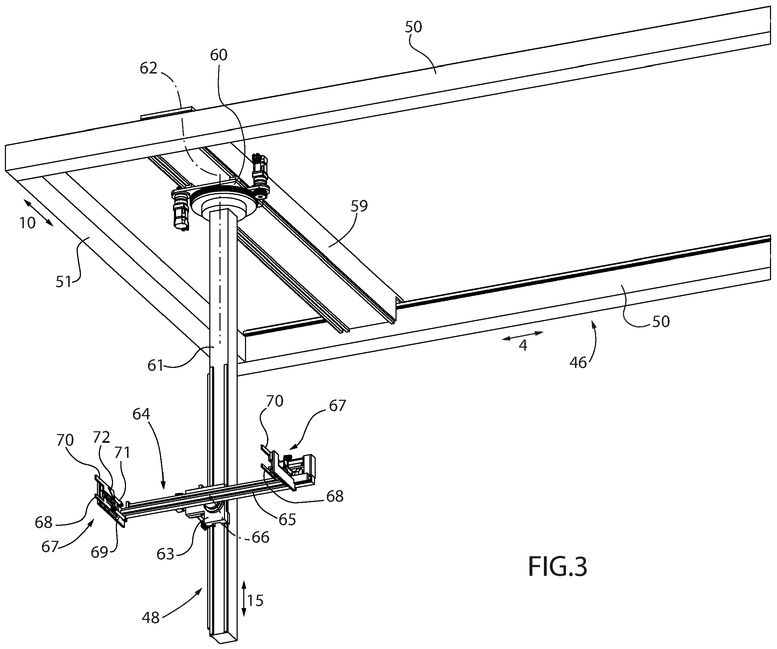

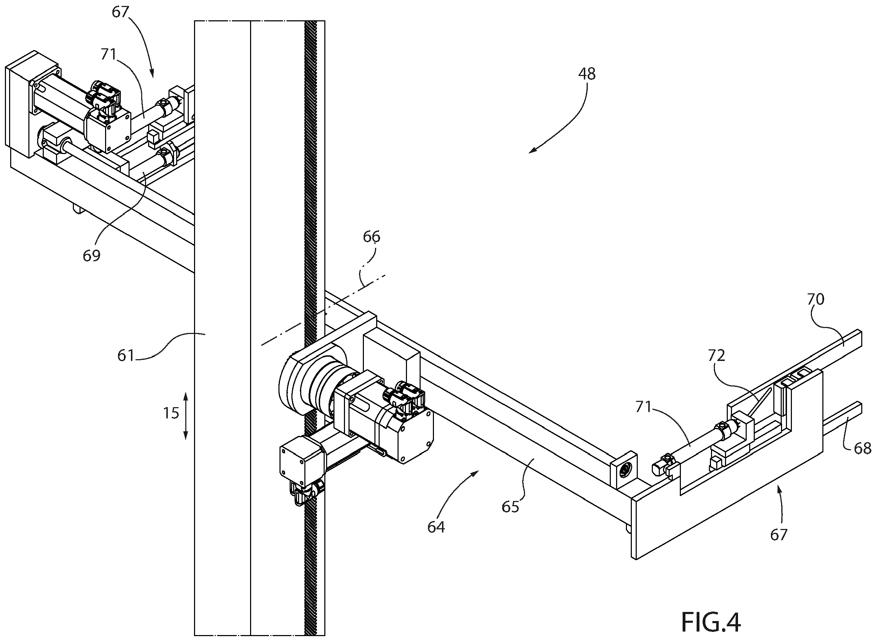

According to figures 1, 3 and 4, the assembly 48 comprises a first horizontal slide 59, which extends between the cross members 50 in the direction 10 and is coupled to the cross members 50 in a sliding manner so as to make straight movements along the cross members 50 in the direction 4.

The assembly 48 further has a second horizontal slide 60 coupled to a lower face of the slide 59 in a sliding manner so as to make straight movements along the slide 59 in the direction 10.

The slide 60 supports a rotary upright 61, which projects downwards from the slide 60 in the direction 15 and is coupled to the slide 60 in a rotary manner so as to move, relative to the slide 60, around a rotation axis 62 parallel to the direction 15.

The assembly 48 further comprises a vertical slide 63 coupled to the upright 61 in a sliding manner so as to make straight movements along the upright 61 in the direction 15.

The slide 63 supports a holding device 64 comprising a rotary bar 65, which is coupled to the slide 63 in a rotary manner so as to rotate, relative to the slide 63, around a horizontal rotation axis 66 transverse to the axis 62 and is provided with two clamping vices 67, one of them being fixed along the bar 65 and the other one being movable along the bar 65.

Each vice 67 comprises a lower jaw 68, which is movable crosswise to the bar 65 between a retracted position and an advanced position due to the thrust of an actuator cylinder 69, and an upper jaw 70, which is movable between a lowered clamping position and a lifted rest position to clamp and release at least one section bar 2.

The jaw 70 is moved between its lowered clamping position and its lifted release position by an actuator cylinder 71 provided with an output rod (not shown) having a free end engaged, in a sliding manner, in an inclined slot 72 obtained through the jaw 70.

In use, by combining the movements of the slide 59 in the direction 4 with the movements of the slide 60 in the direction 10, the movements of the upright 61 around the axis 62 and the movements of the slide 63 in the direction 15, the holding device 64 retrieves each section bar 2 that was just processed from the belt conveyor 13 of the station 12 and moves it to a position facing a pocket 54 of a rack 52.

At this point, the bar 65, at first, is rotated around the axis 66 so as to place the section bar 2 in a substantially vertical position and, then, it is fed into the pocket 54 and into a compartment 56.

Once the section bar 2 is arranged inside the compartment 56, the jaws 68 of the two vices 67 are moved to their retracted position so as to disengage the section bar 2 and allow the section bar 2 to come into contact with the wall 53 and with the side wall 55 of the pocket 54 without scraping along the pocket 54.

Obviously, according to a variant which is not shown herein, the transfer assembly 48 is also used with racks having the shape of a parallelepiped and provided with a plurality of horizontal pockets. In this case, once a first free end of the section bar 2 is inserted inside the pocket, the fixed vice 67 is moved to its release position and the movable vice 67 is moved along the bar 65 so as to completely insert the section bar 2 in the pocket.

According to some variants which are not shown herein:
the belt conveyor 13 of the unloading station 12 is eliminated and the transfer assembly 48 directly retrieves the section bars 2 that were just processed from the rollers 8 of the roller support device 7;
the upright 61 and the slide 63 are eliminated and replaced by a robotic manipulator mounted so as to rotate around the axis 62 and provided with a plurality of articulated arms; and
the upright 61 and the slide 63 are eliminated and replaced by an articulated parallelogram, which is coupled to the slide 60 in a rotary manner so as to rotate, relative to the slide 60, around the axis 62, comprises four articulated arms and supports the holding device 64.

The work centre 1 offer several advantages, which are mainly due to the fact that the unloading unit 45 is relatively small-sized and ensures a relatively high productivity, substantially the same as the productivity of the processing station 16.

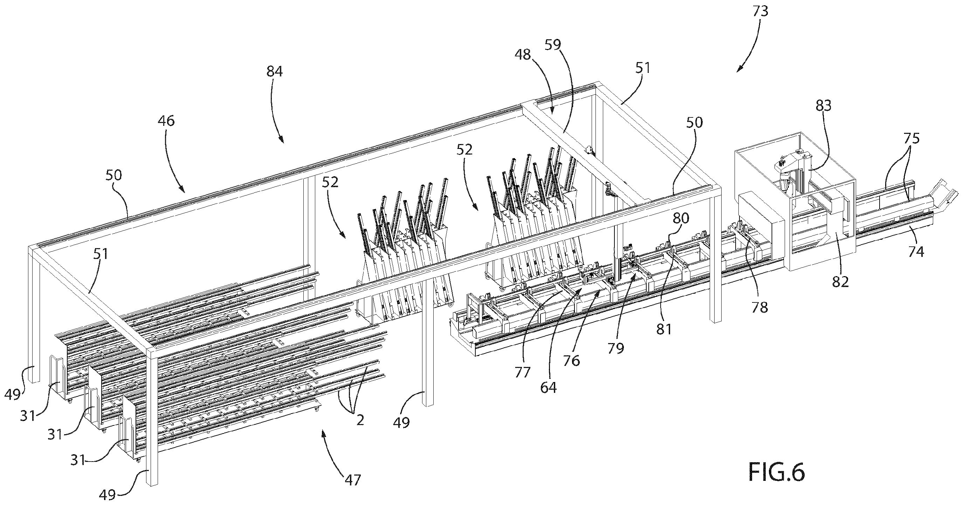

The variant shown in figure 6 relates to a work centre 73 comprising an elongated base 74, which extends in the direction 4, is U-shaped and is provided with two longitudinal guide members 75 obtained on the upper face of the base 74 parallel to the direction 4.

The base 74 supports a plurality of holding units 76 distributed along the base 74.

Each unit 76 comprises a horizontal cross member 77, which extends between the longitudinal members 75 in the direction 10 and is coupled to the longitudinal members 75 in a sliding manner so as to make straight movements along the longitudinal members 75 in the direction 4, in particular during a set-up phase for setting up the work centre 73.

The unit 76 further comprises a support roller 78, which extends along the cross member 77 in the direction 10, is mounted so as to rotate around a longitudinal axis of its parallel to the direction 10 and defines, together with the rollers 78 of the other units 76, a support surface for at least one section bar 2.

The unit 76 is further provided with a clamping vice 79 comprising a fixed jaw 80, which is mounted at an end of the cross member 77, and a movable jaw 81, which is engaged by the roller 78 in a rotary manner and is coupled to the cross member 77 in a sliding manner so as to move between a clamping position and a release position to clamp and release the section bar 2.

The work centre 73 further comprises an overhead crane 82, which is movable along the base 74 in the direction 4 and is provided with at least one operating head 83 movable along the overhead crane 82 in the direction 10, and a loading/unloading unit 84 to load the section bars 2 to be processed onto the holding units 76 and unload the section bars 2 that were just processed from the units 76.

The unit 84 is entirely equivalent to the unit 45 and, therefore, comprises the gantry frame 46, the store 47 and the transfer assembly 48, which will not be described any further.

In particular, the store 47 comprises both the racks 31 and the racks 52.

## Claims

1. A work centre to process section bars (2), in particular made of aluminium, light alloys, PVC or the like, the work centre comprising an elongated base (3) extending in a first direction (4); at least one processing station (16), which is obtained along the base (3) and is provided with at least one operating unit (22, 23) to process the section bars (2); a feeding device (17) to feed the section bars (2) along the base (3) and through the processing station (16) in the first direction (4); and an unloading station (12) to pick up the section bars (2) that were just processed from the feeding device (17); the unloading station (12) comprising, in turn, a store (47) to store the section bars (2) that were just processed; and being **characterized in that** the store (47) comprises at least one rack (52), which is delimited by a substantially horizontal bottom wall (53) and is provided with a plurality of inclined pockets (54), each delimited by two side walls (55), which are parallel to one another and are inclined at an angle other than 90° relative to the bottom wall (53).

2. The work centre according to claim 1, wherein the unloading station (12) further comprises a conveyor device (13) to pick up the section bars (2) that were just processed from the feeding device (17) in a second direction (10), which is transverse to the first direction (4); and an unloading unit (45) to transfer the section bars (2) that were just processed from the conveyor device (13) to the rack (52) .

3. The work centre according to claim 1, wherein the unloading station (12) further comprises an unloading unit (45) to transfer the section bars (2) that were just processed from the feeding device (17) to the rack (52).

4. A work centre to process section bars (2), in particular made of aluminium, light alloys, PVC or the like, the work centre comprising an elongated base (74) extending in a first direction (4); a plurality of holding units (76) mounted on the base (74) in order to hold at least one section bar (2); an overhead crane (82), which is movable along the base (74) in the first direction (4) and is provided with at least one operating head (83) to process the section bar (2), which is movable along the overhead crane (82) in a second direction (10), which is transverse to the first direction (4); and a loading/unloading station (84) to load the section bars (2) to be processed onto the holding units (76) and unload the section bars (2) that were just processed from the holding units (76); the loading/unloading station (84) comprising, in turn, a store (47) to store the section bars (2); and being **characterized in that** the store (47) comprises at least one rack (52), which is delimited by a substantially horizontal bottom wall (53) and is provided with a plurality of inclined pockets (54), each delimited by two side walls (55), which are parallel to one another and are inclined at an angle other than 90° relative to the bottom wall (53).

5. The work centre according to any one of the preceding claims, wherein the rack (52) comprises two rows of inclined pockets (54); the pockets (54) of the two rows of pockets (54) being inclined at substantially opposite angles relative to the bottom wall (53).

6. The work centre according to any one of the preceding claims, wherein each pocket (54) has a plurality of compartments (56), each delimited by two respective further side walls (57), which are substantially perpendicular to the bottom wall (53) of the pocket (54).

7. The work centre according to claim 6, wherein each further side wall (57) has at least one slit (58).

8. The work centre according to any one of the preceding claims and further comprising a gantry frame (46), inside which there is arranged the store (47), and a transfer assembly (48), which is mounted on the gantry frame (46) and is movable along the gantry frame (46) in order to transfer the section bars (2) from and/or to the store (47).

9. The work centre according to claim 8, wherein the transfer assembly (48) comprises a holding device (64), which is coupled to the gantry frame (46) in order to move, relative to the gantry frame (46), in said first and second direction (4, 10).

10. The work centre according to claim 9, wherein the holding device (64) further is movable around a first rotation axis (62), which is parallel to a third direction (15), which is orthogonal to said first and second direction (4, 10).

11. The work centre according to claim 10, wherein the holding device (64) further is movable around a second rotation axis (66), which is substantially horizontal and transverse to the first rotation axis (62).

12. The work centre according to any one of the claims from 9 to 11, wherein the holding device (64) comprises two clamp members (67), each provided with two respective jaws (68, 70), which are movable between a clamping position and a release position to clamp and release the section bars (2) .

13. The work centre according to claim 12, wherein a first jaw (70) of each clamp member (67) is movable between said clamping and release positions and a second jaw (68) of each clamp member (67) is movable between an advanced operating position, in which the second jaw (68) cooperates with the first jaw (70) in order to hold the section bar (2), and a retracted rest position, in which the second jaw (68) disengages the section bar (2).

## Patentansprüche

1. Bearbeitungszentrum zum Bearbeiten von Profilstäben (2), insbesondere aus Aluminium, Leichtmetall, PVC oder dergleichen, wobei das Bearbeitungszentrum eine längliche Basis (3), die sich in einer ersten Richtung (4) erstreckt; zumindest eine Bearbeitungsstation (16), die entlang der Basis (3) angeordnet und mit zumindest einer Betriebseinheit (22, 23) zum Bearbeiten der Profilstäbe (2) versehen ist; eine Zuführvorrichtung (17) zum Zuführen der Profilstäbe (2) entlang der Basis (3) und durch die Bearbeitungsstation (16) in der ersten Richtung (4); und eine Entladestation (12) zum Aufnehmen der Profilstäbe (2), die zuvor von der Zuführvorrichtung (17) verarbeitet wurden, aufweist, wobei die Entladestation (12) wiederum einen Speicher (47) zum Speichern der Profilstäbe (2), die gerade bearbeitet wurden, aufweist und **dadurch gekennzeichnet ist, dass** der Speicher (47) zumindest ein Gestell (52) aufweist, das durch eine im Wesentlichen horizontale Bodenwand (53) begrenzt und mit einer Vielzahl von geneigten Fächern (54) versehen ist, die jeweils durch zwei Seitenwände (55) begrenzt sind, die parallel zueinander verlaufen und in einem anderen Winkel als 90° relativ zur Bodenwand (53) geneigt sind.

2. Bearbeitungszentrum nach Anspruch 1, wobei die Entladestation (12) ferner eine Fördervorrichtung (13) zum Aufnehmen der zuvor bearbeiteten Profilstäbe (2) von der Zuführvorrichtung (17) in einer zweiten Richtung (10), die quer zu der ersten Richtung (4) verläuft; und eine Entladeeinheit (45) zum Überführen der zuvor bearbeiteten Profilstäbe (2) von der Fördervorrichtung (13) zum Gestell (52) aufweist.

3. Bearbeitungszentrum nach Anspruch 1, wobei die Entladestation (12) ferner eine Entladeeinheit (45) aufweist, um die zuvor bearbeiteten Profilstäbe (2) von der Zuführvorrichtung (17) in das Gestell (52) zu überführen.

4. Bearbeitungszentrum zum Bearbeiten von Profilstäben (2), insbesondere aus Aluminium, Leichtmetall, PVC oder dergleichen, wobei das Bearbeitungszentrum eine längliche Basis (74), die sich in einer ersten Richtung (4) erstreckt; eine Vielzahl von Halteeinheiten (76), die an der Basis (74) angebracht sind, um zumindest einen Profilstab (2) zu halten; einen Brückenkran (82), der entlang der Basis (74) in der ersten Richtung (4) bewegbar ist und mit zumindest einem Betätigungskopf (83) zum Bearbeiten des Profilstabs (2) versehen ist, der entlang des Brückenkrans (82) in einer zweiten Richtung (10) bewegbar ist, die quer zu der ersten Richtung (4) verläuft; sowie eine Lade-/Entladestation (84) zum Laden der Profilstäbe (2), die zu bearbeiten sind, auf die Halteeinheiten (76), und zum Entladen der Profilstäbe (2), die zuvor bearbeitet wurden, von den Halteeinheiten (76), aufweist; wobei die Lade-/Entladestation (84) wiederum einen Speicher (47) zum Speichern des Profilstabs (2) aufweist; und **dadurch gekennzeichnet ist, dass** der Speicher (47) zumindest ein Gestell (52) aufweist, das durch eine im Wesentlichen horizontale Bodenwand (53) begrenzt ist und mit einer Vielzahl von geneigten Fächern (54) versehen ist, die jeweils durch zwei Seitenwände (55) begrenzt sind, die parallel zueinander verlaufen und in einem anderen Winkel als 90° relativ zur Bodenwand (53) geneigt sind.

5. Bearbeitungszentrum nach einem der vorstehenden Ansprüche, wobei das Gestell (52) zwei Reihen von geneigten Fächern (54) aufweist, wobei die Fächer (54) der beiden Reihen von Fächern (54) in im Wesentlichen entgegengesetzten Winkeln relativ zur Bodenwand (53) geneigt sind.

6. Bearbeitungszentrum nach einem der vorstehenden Ansprüche, wobei jedes Fach (54) eine Vielzahl von Fächern (56) aufweist, die jeweils durch zwei weitere Seitenwände (57) begrenzt sind, die im Wesentlichen senkrecht zur Bodenwand (53) des Fachs (54) verlaufen.

7. Bearbeitungszentrum nach Anspruch 6, wobei jede weitere Seitenwand (57) zumindest einen Schlitz (58) aufweist.

8. Bearbeitungszentrum nach einem der vorstehenden Ansprüche und ferner aufweisend einen Bockrahmen (46), in dem der Speicher (47) angeordnet ist, und eine Überführungsvorrichtung (48), die an dem Bockrahmen (46) angebracht und entlang des Bockrahmens (46) bewegbar ist, um die Profilstäbe (2) von und/oder zu dem Speicher (47) zu überführen.

9. Bearbeitungszentrum nach Anspruch 8, wobei die Überführungsvorrichtung (48) eine Haltevorrichtung (64) aufweist, die mit dem Bockrahmen (46) gekoppelt ist, um sich relativ zum Bockrahmen (46) in der ersten und zweiten Richtung (4, 10) zu bewegen.

10. Bearbeitungszentrum nach Anspruch 9, wobei die Haltevorrichtung (64) ferner um eine erste Drehachse (62) bewegbar ist, die parallel zu einer dritten Richtung (15) verläuft, die orthogonal zu der ersten und zweiten Richtung (4, 10) verläuft.

11. Bearbeitungszentrum nach Anspruch 10, wobei die Haltevorrichtung (64) ferner um eine zweite Drehachse (66) bewegbar ist, die im Wesentlichen horizontal und quer zur ersten Drehachse (62) verläuft.

12. Bearbeitungszentrum nach einem der Ansprüche 9 bis 11, wobei die Haltevorrichtung (64) zwei Klemmelemente (67) aufweist, die jeweils mit zwei Backen (68, 70) versehen sind, die zwischen einer Klemmposition und einer Freigabeposition zum Klemmen und Freigeben des Profilstabs (2) bewegbar sind.

13. Bearbeitungszentrum nach Anspruch 12, wobei eine erste Backe (70) jedes Klemmelements (67) zwischen der Klemm- und der Freigabeposition bewegbar ist und eine zweite Backe (68) jedes Klemmelements (67) zwischen einer vorgeschobenen Betriebsposition, in der die zweite Backe (68) mit der ersten Backe (70) zusammenwirkt, um den Profilstab (2) zu halten, und einer eingefahrenen Ruheposition, in der die zweite Backe (68) den Profilstab (2) freigibt, bewegbar ist.

## Revendications

1. Poste de travail pour traiter des barres de section (2), constituées en particulier d'aluminium, d'alliages légers, de PVC ou semblable, le poste de travail comprenant une base allongée (3) s'étendant dans une première direction (4) ; au moins une station de traitement (16), qui est obtenue le long de la base (3) et est munie d'au moins une unité d'opération (22, 23) pour traiter les barres de section (2) ; un dispositif d'introduction (17) pour introduire les barres de section (2) le long de la base (3) et à travers la station de traitement (16) dans la première direction (4) ; et une station de décharge (12) pour prélever les barres de section (2) qui ont été juste traitées à partir du dispositif d'introduction (17) ; la station de décharge (12) comprenant, à son tour, un stockage (47) pour stocker les barres de section (2) qui ont été juste traitées ; et étant **caractérisé en ce que** le stockage (47) comprend au moins un râtelier (52), qui est délimité par une paroi de fond sensiblement horizontale (53) et est muni de plusieurs poches inclinées (54), chacune délimitée par deux parois latérales (55), qui sont parallèles l'une à l'autre et sont inclinées à un angle différent de 90° par rapport à la paroi de fond (53).

2. Poste de travail selon la revendication 1, dans lequel la station de décharge (12) comprend de plus un dispositif de convoyeur (13) pour prélever les barres de section (2) qui ont été juste traitées à partir du dispositif d'introduction (17) dans une seconde direction (10), qui est transversale à la première direction (4) ; et une unité de décharge (45) pour transférer les barres de section (2) qui ont été juste traitées à partir du dispositif de convoyeur (13) jusqu'au râtelier (52).

3. Poste de travail selon la revendication 1, dans lequel la station de décharge (12) comprend de plus une unité de décharge (45) pour transférer les barres de section (2) qui ont été juste traitées à partir du dispositif d'introduction (17) jusqu'au râtelier (52).

4. Poste de travail pour traiter des barres de section (2), constituées en particulier d'aluminium, d'alliages légers, de PVC ou semblable, le poste de travail comprenant une base allongée (74) s'étendant dans une première direction (4) ; plusieurs unités de support (76) montées sur la base (74) afin de supporter au moins une barre de section (2) ; un pont roulant (82), qui est mobile le long de la base (74) dans la première direction (4) et est muni d'au moins une tête d'opération (83) pour traiter la barre de section (2), qui est mobile le long du pont roulant (82) dans une seconde direction (10), qui est transversale à la première direction (4) ; et une station de charge/ décharge (84) pour charger les barres de section (2) à traiter sur les unités de support (76) et décharger les barres de section (2) qui ont été juste traitées des unités de support (76) ; la station de charge/ décharge (84) comprenant, à son tour, un stockage (47) pour stocker les barres de section (2) ; et étant **caractérisé en ce que** le stockage (47) comprend au moins un râtelier (52), qui est délimité par une paroi de fond sensiblement horizontale (53) et est muni de plusieurs poches inclinées (54), chacune délimitée par deux parois latérales (55) qui sont parallèles l'une à l'autre et sont inclinées à un angle différent de 90° par rapport à la paroi de fond (53).

5. Poste de travail selon l'une quelconque des revendications précédentes, dans lequel le râtelier (52) comprend deux rangées de poches inclinées (54) ; les poches (54) des deux rangées de poches (54) étant inclinées à des angles sensiblement opposés par rapport à la paroi de fond (53).

6. Poste de travail selon l'une quelconque des revendications précédentes, dans lequel chaque poche (54) présente plusieurs compartiments (56), chacun délimité par deux parois latérales supplémentaires respectives (57), lesquelles sont sensiblement perpendiculaires à la paroi de fond (53) de la poche (54).

7. Poste de travail selon la revendication 6, dans lequel chaque paroi latérale supplémentaire (57) présente au moins une fente (58).

8. Poste de travail selon l'une quelconque des revendications précédentes et comprenant de plus un cadre de portique (46), à l'intérieur duquel est disposé le stockage (47) et un ensemble de transfert (48), qui est monté sur le cadre de portique (46) et est mobile le long du cadre de portique (46) afin de transférer les barres de section (2) de et/ou vers le stockage (47).

9. Poste de travail selon la revendication 8, dans lequel l'ensemble de transfert (48) comprend un dispositif de support (64), qui est couplé au cadre de portique (46) afin de se déplacer, par rapport au cadre de portique (46), dans lesdites première et seconde directions (4, 10).

10. Poste de travail selon la revendication 9, dans lequel le dispositif de support (64) est de plus mobile autour d'un premier axe de rotation (62), qui est parallèle à une troisième section (15), qui est orthogonale auxdites première et seconde directions (4, 10).

11. Poste de travail selon la revendication 10, dans lequel le dispositif de support (64) est de plus mobile autour d'un second axe de rotation (66), qui est sensiblement horizontal et transversal au premier axe de rotation (62).

12. Poste de travail selon l'une quelconque des revendications 9 à 11, dans lequel le dispositif de support (64) comprend deux éléments de serrage (67), chacun muni de deux mâchoires de serrage respectives (68, 70), qui sont mobiles entre une position de serrage et une position de libération pour serrer et libérer les barres de section (2).

13. Poste de travail selon la revendication 12, dans lequel une première mâchoire de serrage (70) de chaque élément de serrage (67) est mobile entre lesdites positions de serrage et libération et une seconde mâchoire de serrage (68) de chaque élément de serrage (67) est mobile entre une position d'opération avancée, dans laquelle la seconde mâchoire de serrage (68) coopère avec la première mâchoire de serrage (70) afin de supporter la barre de section (2), et une position de repos rétractée, dans laquelle la seconde mâchoire de serrage (68) désengage la barre de section (2).
